(19) Europäisches Patentamt
European Patent Office
Office européen des brevets

(11) EP 4 156 364 B1

(12) EUROPEAN PATENT SPECIFICATION

(45) Date of publication and mention of the grant of the patent:
**27.03.2024 Bulletin 2024/13**

(21) Application number: **22198132.7**

(22) Date of filing: **27.09.2022**

(51) International Patent Classification (IPC):
***H01M 10/0525*** *(2010.01)* ***H01M 10/0567*** *(2010.01)*

(52) Cooperative Patent Classification (CPC):
**H01M 10/0567; H01M 10/0525;** Y02E 60/10

(54) **SECONDARY BATTERY ELECTROLYTE AND LITHIUM SECONDARY BATTERY INCLUDING THE SAME**

SEKUNDÄRBATTERIEELEKTROLYT UND LITHIUMSEKUNDÄRBATTERIE DAMIT

ÉLECTROLYTE DE BATTERIE SECONDAIRE ET BATTERIE SECONDAIRE AU LITHIUM LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2021 KR 20210128105**

(43) Date of publication of application:
**29.03.2023 Bulletin 2023/13**

(73) Proprietor: **SK On Co., Ltd.**
**Seoul 03161 (KR)**

(72) Inventors:
- **LEE, Jin Hong**
  **34124 Daejeon (KR)**
- **KIM, Chan Woo**
  **34124 Daejeon (KR)**
- **KIM, Sung Jin**
  **34124 Daejeon (KR)**
- **CHO, In Haeng**
  **34124 Daejeon (KR)**

(74) Representative: **Stolmár & Partner Patentanwälte PartG mbB**
**Blumenstraße 17**
**80331 München (DE)**

(56) References cited:
**US-A1- 2006 240 329** **US-A1- 2020 127 333**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### CROSS-REFERENCE TO RELATED APPLICATIONS

This application claims priority under 35 U.S.C. §119 to Korean Patent Application No. 10-2021-0128105, filed on September 28, 2021, in the Korean Intellectual Property Office.

### TECHNICAL FIELD

The following disclosure relates to a secondary battery electrolyte and a lithium secondary battery including the same, and more particularly, to a secondary battery electrolyte having improved flame retardancy and a lithium secondary battery including the same.

### BACKGROUND

Recently, as an industrial environment is changed to pursue energy, studies on a new energy source have been intensively conducted.

As such an energy source, a lithium secondary battery already has been efficiently used as a power supply for mobile devices such as a smart phone and a laptop computer or electric vehicles because it has a high energy density and low self-discharge.

Recently, a lithium secondary battery has been used as a main power source or an auxiliary power source of an electric vehicle or a hybrid vehicle.

Therefore, there is a need for a lithium secondary battery having a high energy density to exhibit high performance and stably supply power.

However, when an operating voltage range is widened while using an additive for an electrolyte according to the related art for a high voltage lithium secondary battery as it is, internal resistance and a lifespan of the battery are rapidly reduced.

That is, when a general electrolyte according to the related art is used, battery characteristics are excellent at a voltage of 4.2 V or lower; however, as the voltage is increased, a battery performance is deteriorated at a voltage of 4.2 V or higher.

In addition, since a non-aqueous electrolyte used as a general electrolyte is flammable, an internal pressure of an element is increased due to damage caused by an external impact, heat, an over-voltage, and the like, and thus, the electrolyte may be leaked. The leaked electrolyte easily ignites, resulting in damage to a device or occurrence of a fire.

In particular, as a capacitor used for a vehicle is enlarged and mounted in a large number, a risk of fire is increased. Therefore, there is a need for an electrolyte having flame retardancy.

However, in a case where flame retardancy is imparted to an electrolyte, characteristics such as electrical conductivity, lifespan characteristics, and charge and discharge efficiency are significantly deteriorated. Thus, it is required to study an electrolyte having flame retardancy while maintaining the basic characteristics thereof. US 2020/127333 A1 discloses cyclophosphates for use as electreolyte additives in a lithium ion secondary battery. It

### SUMMARY

An embodiment of the present invention is directed to providing a secondary battery electrolyte having improved flame retardant characteristics while maintaining high-efficiency charge and discharge characteristics, high-temperature characteristics, and lifespan characteristics, and a lithium secondary battery including the same.

In one general aspect, a secondary battery electrolyte contains:

a lithium salt;
a non-aqueous organic solvent; and
a cyclophosphate compound represented by the following Chemical Formula 1:

[Chemical Formula 1]

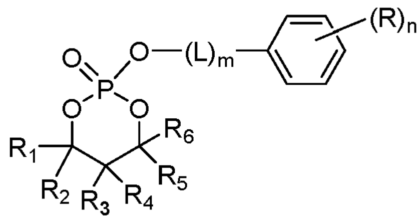

in Chemical Formula 1,

$R_1$ to $R_6$ are each independently hydrogen, C1-C10 alkyl, or C6-C12 aryl C1-C10 alkyl;
L is C1-C5 alkylene;
R is fluoro or fluoro C1-C10 alkyl;
m is an integer of 0 to 2; and
n is an integer of 0 to 5.

In Chemical Formula 1, $R_1$ to $R_6$ may be each independently hydrogen, C1-C5 alkyl, or C1-C5 alkyl substituted with phenyl; L may be C1-C3 alkylene; R may be fluoro or fluoro C1-C5 alkyl; m may be an integer of 0 or 1; and n may be an integer of 0 to 2.

The cyclophosphate compound may be represented by the following Chemical Formula 2:

[Chemical Formula 2]

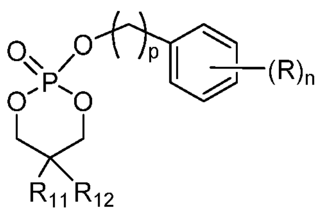

in Chemical Formula 2,

R is fluoro or fluoro C1-C10 alkyl;
$R_{11}$ and $R_{12}$ are each independently hydrogen, C1-C10 alkyl, or C6-C12 aryl C1-C10 alkyl;
p is an integer of 0 to 3; and
n is an integer of 0 to 5.

In Chemical Formula 2, R may be fluoro or perfluoro C1-C5 alkyl; $R_{11}$ and $R_{12}$ may be each independently hydrogen, C1-C5 alkyl, or phenyl C1-C5 alkyl; p may be an integer of 0 to 2; and n may be an integer of 0 to 3.

The cyclophosphate compound may be selected from, but is not limited to, the following compounds:

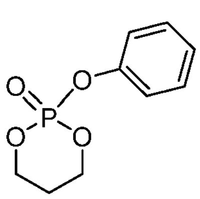 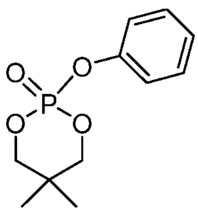 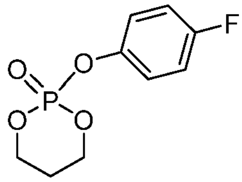 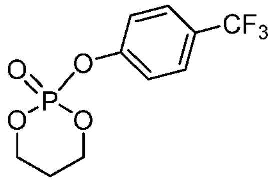

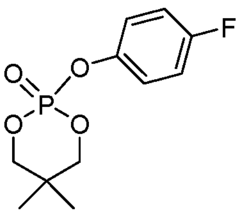 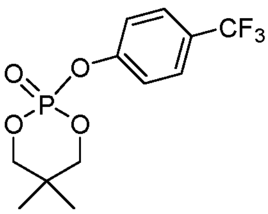 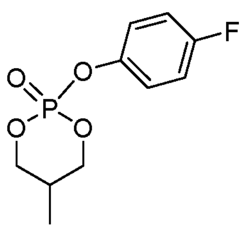 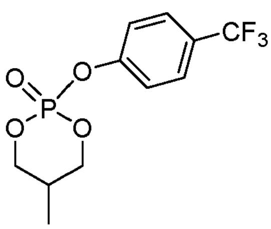

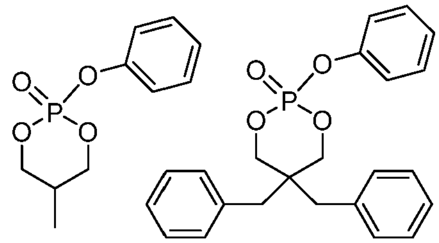
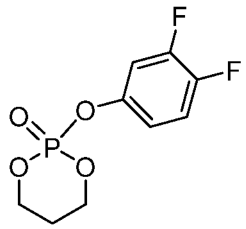
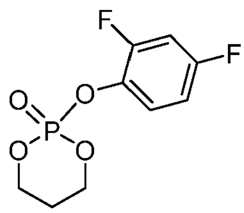

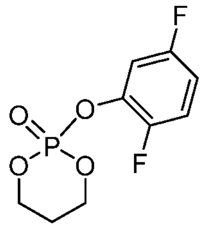
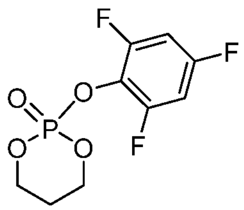
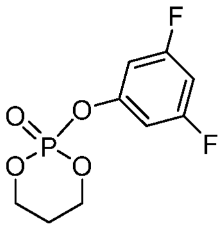
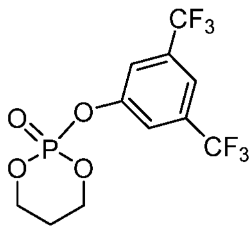

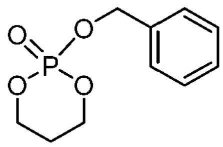
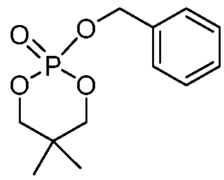
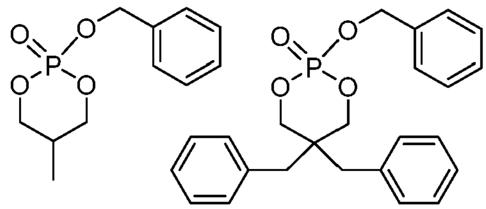

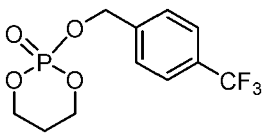
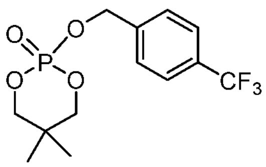
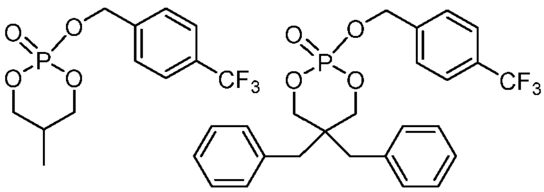
.

The cyclophosphate compound may be contained in an amount of 1 to 15 wt% with respect to a total weight of the secondary battery electrolyte.

The secondary battery electrolyte may further contain one or two or more additives selected from the group consisting of an oxalatoborate-based compound, an oxalatophosphate-based compound, a fluorine-substituted carbonate-based compound, a vinylidene carbonate-based compound, and a sulfinyl group-containing compound. The additive may be contained in an amount of 0.2 to 5 wt% with respect to a total weight of the secondary battery electrolyte.

The lithium salt may be one or two or more selected from the group consisting of $LiPF_6$, $LiBF_4$, $LiClO_4$, $LiSbF_6$, $LiAsF_6$, $LiN(SO_3C_2F_5)_2$, $LiCF_3SO_3$, $LiC_4F_9SO_3$, $LiC_6H_5SO_3$, LiSCN, $LiAlO_2$, $LiAlCl_4$, LiCl, LiI, and $LiB(C_2O_4)_2$. The lithium salt may be present in an amount of 0.3 to 1.2 moles.

In another general aspect, a lithium secondary battery includes: a cathode; an anode; a separator interposed between the cathode and the anode; and the secondary battery electrolyte.

Other features and aspects will be apparent from the following detailed description, the drawings, and the claims.

## DETAILED DESCRIPTION OF EMBODIMENTS

Hereinafter, the present invention will be described in more detail. Unless otherwise defined, all the technical terms and scientific terms used herein have the general meanings as commonly understood by those skilled in the art to which the present invention pertains.

The term "alkyl" described in the present invention refers to an aliphatic hydrocarbon group having 1 to 10 carbon atoms, preferably 1 to 8 carbon atoms, more preferably 1 to 5 carbon atoms, and still more preferably 1 to 4 carbon atoms. The alkyl used alone or in combination may be linear or branched alkyl. Specific examples of the linear or branched alkyl may include methyl, ethyl, n-propyl, isopropyl, n-butyl, isobutyl, tert-butyl, n-pentyl, neopentyl, n-hexyl, isohexyl, n-heptyl, n-octyl, n-nonyl, and n-decyl.

The term "fluoroalkyl" described in the present invention means that some or all hydrogens present in alkyl are

substituted with fluoro, and examples thereof may include $-CF_3$, $-CH_2CF_3$, and $-CF_2CF_3$.

The term "fluoro-substituted cyclic carbonate" described in the present invention means that hydrogen present in cyclic carbonate is substituted with one or more fluoro, and examples thereof may include fluoroethylene carbonate and fluoropropylene carbonate.

The term "perfluoro alkyl" described in the present invention means that all hydrogens are substituted with fluoro, the hydrogen being present in alkyl having 1 to 10 carbon atoms, preferably 1 to 6 carbon atoms, and more preferably 1 to 4 carbon atoms, and examples thereof may include trifluoromethane and pentafluoroethane.

The term "aryl" described in the present invention refers to a carbocyclic aromatic group containing 5 to 10 ring atoms. Representative examples thereof include, but are not limited to, phenyl, tolyl, xylyl, naphthyl, tetrahydronaphthyl, anthracenyl, fluorenyl, indenyl, and azulenyl. The carbocyclic aromatic group may be selectively substituted.

The term "arylalkyl" described in the present invention means that some or all hydrogens present in alkyl are substituted with aryl. Here, aryl and alkyl are as defined above.

The term "discharge" described in the present invention refers to a process of deintercalating lithium ions from an anode, and the term "charge" refers to a process of intercalating lithium ions into an anode.

The present invention provides a secondary battery electrolyte having significantly excellent lifespan characteristics, charge and discharge characteristics, and flame retardancy. The secondary battery electrolyte of the present invention contains:

a lithium salt;
a non-aqueous organic solvent; and
a cyclophosphate compound represented by the following Chemical Formula 1:

[Chemical Formula 1]

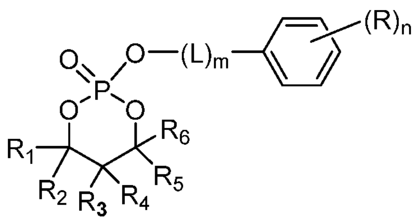

in Chemical Formula 1,
$R_1$ to $R_6$ are each independently hydrogen, C1-C10 alkyl, or C6-C12 aryl C1-C10 alkyl;
L is C1-C5 alkylene;
R is fluoro or fluoro C1-C10 alkyl;
m is an integer of 0 to 2; and
n is an integer of 0 to 5.

The secondary battery electrolyte according to an exemplary embodiment of the present invention contains the cyclophosphate compound represented by Chemical Formula 1, such that the secondary battery electrolyte has improved retardancy while improving charge and discharge efficiency, lifespan characteristics, and high-temperature storage stability of a lithium secondary battery including the same.

Specifically, the secondary battery electrolyte according to an exemplary embodiment of the present invention contains the cyclophosphate compound, which is a specific compound, such that a lithium secondary battery including the same has further improved electrical characteristics and flame retardant characteristics.

Specifically, in Chemical Formula 1 according to an exemplary embodiment of the present invention, $R_1$ to $R_6$ may be each independently hydrogen, C1-C5 alkyl, or C1-C5 alkyl substituted with phenyl; L may be C1-C3 alkylene; R may be fluoro or fluoro C1-C5 alkyl; m may be an integer of 0 or 1; and n may be an integer of 0 to 2, and more specifically, $R_1$ to $R_6$ may be each independently hydrogen, C1-C4 alkyl, or C1-C4 alkyl substituted with phenyl; L may be C1-C2 alkylene; R may be fluoro or fluoro C1-C4 alkyl; and m and n may be each independently an integer of 0 or 1.

In Chemical Formula 1 according to an exemplary embodiment of the present invention, $R_1$ to $R_6$ may be each independently hydrogen or C1-C4 alkyl; L may be methylene; R may be fluoro or fluoro C1-C3 alkyl; and m and n may be each independently an integer of 0 or 1.

Specifically, the cyclophosphate compound according to an exemplary embodiment of the present invention may be represented by the following Chemical Formula 2:

[Chemical Formula 2]

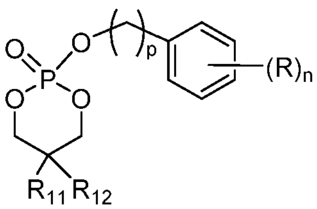

in Chemical Formula 2,

R is fluoro or C1-C10 alkyl including one or more fluoro;
$R_{11}$ and $R_{12}$ are each independently hydrogen, C1-C10 alkyl, or C6-C12 aryl C1-C10 alkyl;
p is an integer of 0 to 3; and
n is an integer of 0 to 5.

A lithium secondary battery containing a cyclophosphate compound represented by Chemical Formula 2 according to an exemplary embodiment of the present invention has further improved charge and discharge efficiency, lifespan characteristics, and high-temperature storage stability while having self-extinguishing properties.

In Chemical Formula 2 according to an exemplary embodiment of the present invention, R may be fluoro or perfluoro C1-C5 alkyl; $R_{11}$ and $R_{12}$ may be each independently hydrogen, C1-C5 alkyl, or phenyl C1-C5 alkyl; p may be an integer of 0 to 2; and n may be an integer of 0 to 3.

Specifically, in Chemical Formula 2 according to an exemplary embodiment of the present invention, R may be fluoro or perfluoro C1-C4 alkyl; $R_{11}$ and $R_{12}$ may be each independently hydrogen, C1-C4 alkyl, or phenyl C1-C4 alkyl; p may be an integer of 0 to 2; and n may be an integer of 0 to 2, and as another aspect, in Chemical Formula 2, R may be fluoro or perfluoro C1-C4 alkyl; $R_{11}$ and $R_{12}$ may be each independently hydrogen or C1-C4 alkyl; p may be an integer of 0 or 1; and n may be an integer of 0 or 1.

More specifically, the cyclophosphate compound according to an exemplary embodiment of the present invention may be selected from, but is not limited to, the following compounds:

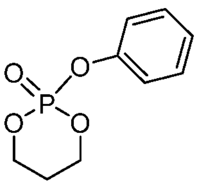
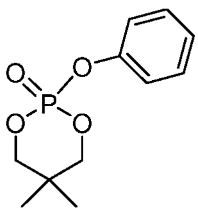
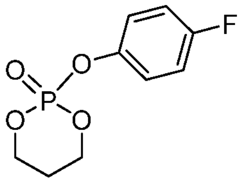
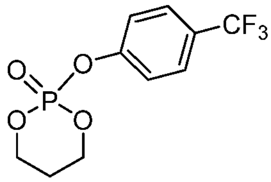

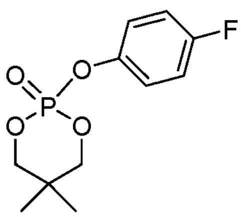
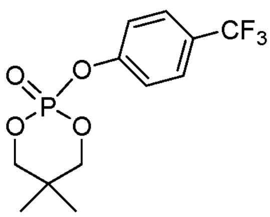
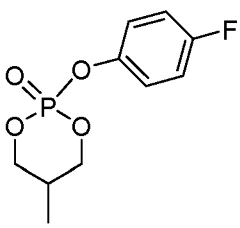
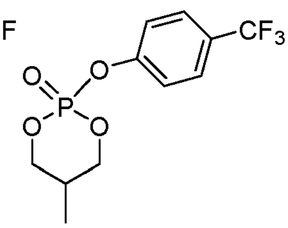

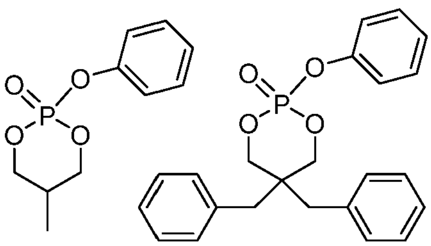
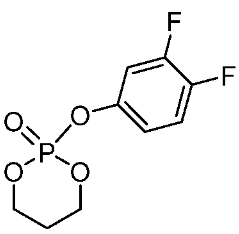
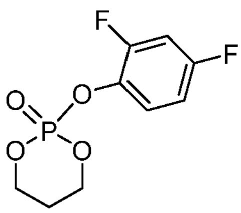

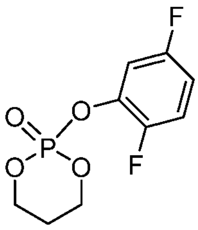 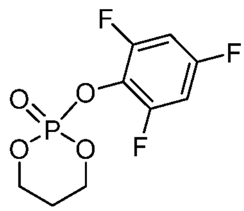 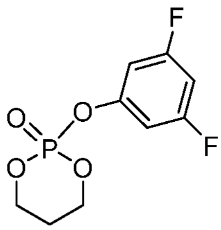 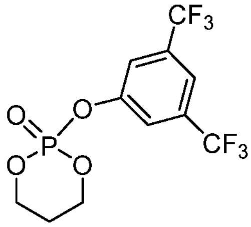

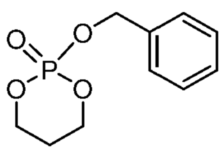 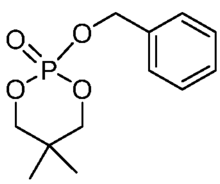 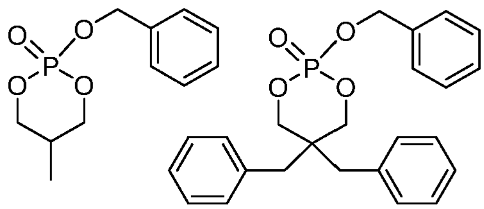

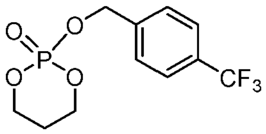 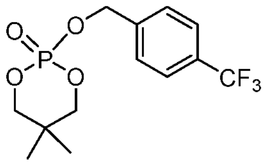 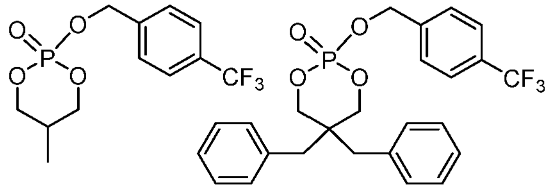 .

The cyclophosphate compound according to an exemplary embodiment of the present invention may be contained in an amount of 1 to 15 wt%, specifically, 3 to 15 wt%, and more specifically, 5 to 15 wt%, with respect to a total weight of the secondary battery electrolyte, and as another aspect, the cyclophosphate compound may be contained in an amount of 7 to 12 wt% with respect to the total weight of the secondary battery electrolyte.

Specifically, the secondary battery electrolyte according to an exemplary embodiment of the present invention may further contain one or two or more additives selected from the group consisting of an oxalatoborate-based compound, an oxalatophosphate-based compound, a fluorine-substituted carbonate-based compound, a vinylidene carbonate-based compound, and a sulfinyl group-containing compound.

The secondary battery electrolyte according to an exemplary embodiment of the present invention may further contain an oxalatoborate-based compound. The secondary battery electrolyte contains the cyclophosphate compound and the oxalatoborate-based compound of the present invention in combination, such that flame retardancy and electrical characteristics may be further improved.

The secondary battery electrolyte according to an exemplary embodiment of the present invention may further contain an oxalatoborate-based compound.

The secondary battery electrolyte according to an exemplary embodiment of the present invention may further contain a fluorine-substituted carbonate-based compound.

The secondary battery electrolyte according to an exemplary embodiment of the present invention may further contain a vinylidene carbonate-based compound.

The secondary battery electrolyte according to an exemplary embodiment of the present invention may further contain a sulfinyl group-containing compound.

The oxalatoborate-based compound according to an exemplary embodiment of the present invention may be a compound represented by the following Chemical Formula A or lithium bis(oxalato)borate (LiBOB ($LiB(C_2O_4)_2$)):

[Chemical Formula A]

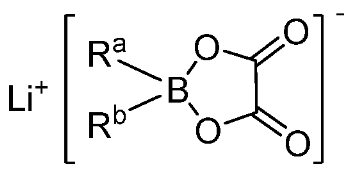

in Chemical Formula A, $R^a$ and $R^b$ are each independently halogen or halo C1-C10 alkyl.

Specific examples of the oxalatoborate-based compound may include lithium difluoro(oxalato)borate (LiDFOB, ($LiB(C_2O_4)F_2$)) and lithium bis(oxalato)borate (LiBOB, ($LiB(C_2O_4)_2$)).

The oxalatophosphate-based compound may be a compound represented by the following Chemical Formula B or lithium difluoro bis(oxalato)phosphate (LiDFBOP, ($LiPF_2(C_2O_4)_2$)):

[Chemical Formula B]

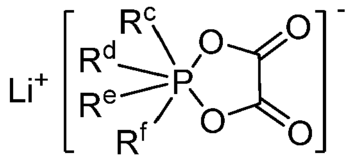

in Chemical Formula B, $R^c$ to $R^f$ are each independently halogen or halo C1-C10 alkyl.

Specific examples of the oxalatophosphate-based compound may include lithium tetrafluoro(oxalato)phosphate (LiTFOP, ($LiPF_4(C_2O_4)$)) and lithium difluoro bis(oxalato)phosphate (LiDFBOP, ($LiPF_2(C_2O_4)_2$)).

The fluorine-substituted carbonate-based compound may be fluoroethylene carbonate (FEC), difluoroethylene carbonate (DFEC), fluorodimethyl carbonate (FDMC), fluoroethylmethyl carbonate (FEMC), or a mixture thereof.

The vinylidene carbonate-based compound may be vinylene carbonate (VC), vinyl ethylene carbonate (VEC), or a mixture thereof.

The sulfinyl group (S=O)-containing compound may be a sulfone compound, a sulfite compound, a sulfonate compound, a sultone compound, or a sulfate compound, and these sulfinyl group-containing compounds may be used alone or in combination.

Specifically, the sulfone compound may be a sulfone compound represented by the following Chemical Formula C:

[Chemical Formula C]

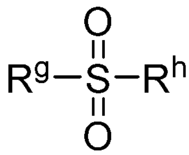

in Chemical Formula C,

$R^g$ and $R^h$ are each independently hydrogen, halogen, C1-C10 alkyl, C2-C10 alkenyl, halo C1-C10 alkyl, halo C2-C10 alkenyl, or C6-C12 aryl.

Non-limiting examples of the sulfone compound may include, but are not limited to, dimethyl sulfone, diethyl sulfone, ethyl methyl sulfone, methyl vinyl sulfone, and divinyl sulfone. In addition, these compounds may be used alone or as a mixture of two or more thereof.

Specifically, the sulfite compound may be a sulfite compound represented by the following Chemical Formula D:

[Chemical Formula D]

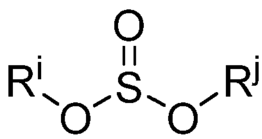

in Chemical Formula D,

$R^i$ and $R^j$ are each independently hydrogen, halogen, C1-C10 alkyl, C2-C10 alkenyl, halo C1-C10 alkyl, halo C2-C10 alkenyl, or C6-C12 aryl, or $R^i$ and $R^j$ may be linked to each other by $-CR^{100}R^{101}CR^{102}R^{103}(CR^{104}R^{105})_m-$ to form a ring;

$R^{100}$ to $R^{105}$ are each independently hydrogen, C1-C10 alkyl, or phenyl; and
m is an integer of 0 or 1.

Non-limiting examples of the sulfite compound may include, but are not limited to, ethylene sulfite, methyl ethylene sulfite, ethyl ethylene sulfite, 4,5-dimethyl ethylene sulfite, 4,5-diethyl ethylene sulfite, propylene sulfite, 4,5-dimethyl propylene sulfite, 4,5-diethyl propylene sulfite, 4,6-dimethyl propylene sulfite, 4,6-diethyl propylene sulfite, and 1,3-butylene glycol sulfite. In addition, these compounds may be used alone or as a mixture of two or more thereof.

Specifically, the sulfonate compound may be a sulfonate compound represented by the following Chemical Formula E:

[Chemical Formula E]

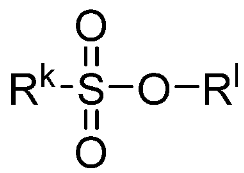

in Chemical Formula E,

$R^k$ and $R^l$ are each independently hydrogen, halogen, C1-C10 alkyl, C2-C10 alkenyl, halo C1-C10 alkyl, halo C2-C10 alkenyl, or C6-C12 aryl.

Non-limiting examples of the sulfonate compound may include, but are not limited to, methyl methanesulfonate, ethyl methanesulfonate, methyl ethanesulfonate, propyl methanesulfonate, methyl propanesulfonate, ethyl propanesulfonate, vinyl methanesulfonate, allyl methanesulfonate, vinyl benzenesulfonate, and allyl prop-2-ene sulfonate. In addition, these compounds may be used alone or as a mixture of two or more thereof.

Specifically, the sultone compound may be a sultone compound represented by the following Chemical Formula F:

[Chemical Formula F]

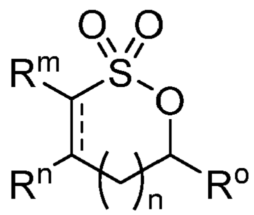

in Chemical Formula F,

- - - represents a single bond or a double bond;
$R^m$ to $R^o$ are each independently hydrogen, halogen, C1-C10 alkyl, C2-C10 alkenyl, halo C1-C10 alkyl, halo C2-C10 alkenyl, or C6-C12 aryl; and
n is an integer of 0 to 3.

Non-limiting examples of the sultone compound may include, but are not limited to, ethane sultone, 1,3-propane sultone (PS), 1,4-butane sultone (BS), ethene sultone, 1,3-propene sultone (PES), 3-fluoro-1,3-propane sultone (FPS), and 1,4-butene sultone. In addition, these compounds may be used alone or as a mixture of two or more thereof.

Specifically, the sulfate compound may be a cyclic sulfate compound represented by the following Chemical Formula G:

[Chemical Formula G]

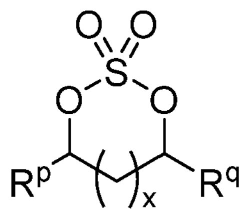

in Chemical Formula G,

$R^p$ and $R^q$ are each independently hydrogen, halogen, C1-C10 alkyl, C2-C10 alkenyl, halo C1-C10 alkyl, halo C2-C10 alkenyl, or C6-C12 aryl; and
x is an integer of 0 to 3.

Non-limiting examples of the sulfate compound may include, but are not limited to, ethylene sulfate (ESA), propylene sulfate, 2,3-butylene sulfate, 1,3-propylene sulfate, and 1,3-butylene sulfate. In addition, these compounds may be used alone or as a mixture of two or more thereof.

In an exemplary embodiment of the present invention, the secondary battery electrolyte of the present invention may further contain two or more additives selected from an oxalatoborate-based compound, an oxalatophosphate-based compound, a sultone-based compound, and a sulfate-based compound.

Specifically, the secondary battery electrolyte according to an exemplary embodiment of the present invention may further contain two or more additives selected from fluoroethylene carbonate, difluoroethylene carbonate, fluorodimethyl carbonate, fluoroethylmethyl carbonate, lithium difluoro(oxalato)borate (LiDFOB), lithium bis(oxalato)borate (LiBOB), lithium difluoro bis(oxalato)phosphate (LiDFBOP), ethane sultone, 1,3-propane sultone, 1,4-butane sultone, ethene sultone, 1,3-propene sultone, 3-fluoro-1,3-propane sultone, 1,4-butene sultone, ethylene sulfate, propylene sulfate, 2,3-butylene sulfate, 1,3-propylene sulfate, and 1,3-butylene sulfate.

The secondary battery electrolyte according to another exemplary embodiment of the present invention may further contain two or more additives selected from fluoroethylene carbonate, difluoroethylene carbonate, fluorodimethyl carbonate, fluoroethylmethyl carbonate, lithium difluoro(oxalato)borate (LiDFOB), lithium bis(oxalato)borate (LiBOB), lithium difluoro bis(oxalato)phosphate (LiDFBOP), ethane sultone, 1,3-propane sultone, 1,4-butane sultone, ethene sultone, 1,3-propene sultone, 3-fluoro-1,3-propane sultone, and 1,4-butene sultone.

In an exemplary embodiment of the present invention, a content of the additive is not particularly limited, but may be contained in the secondary battery electrolyte in an amount of 0.2 to 10.0 wt%, and more specifically, 0.5 to 5.0 wt%, with respect to the total weight of the secondary battery electrolyte, in order to improve charge and discharge characteristics, lifespan characteristics, and storage stability.

Any lithium salt used in a secondary battery electrolyte may be used, and the lithium salt according to an exemplary embodiment of the present invention may be one or two or more selected from the group consisting of $LiPF_6$, $LiBF_4$, $LiClO_4$, $LiSbF_6$, $LiAsF_6$, $LiN(SO_3C_2F_5)_2$, $LiCF_3SO_3$, $LiC_4F_9SO_3$, $LiC_6H_5SO_3$, LiSCN, $LiAlO_2$, $LiAlCl_4$, LiCl, LiI, and $LiB(C_2O_4)_2$, and preferably, may be one or two or more selected from $LiPF_6$, $LiBF_4$, $LiClO_4$, $LiSbF_6$, and $LiAsF_6$.

In the secondary battery electrolyte according to an exemplary embodiment of the present invention, the lithium salt may be present at a concentration of 0.3 to 1.2 M, and preferably 0.3 to 1.0 M.

In the secondary battery electrolyte according to an exemplary embodiment of the present invention, the non-aqueous organic solvent may include carbonate, ester, ether, or ketone alone, or a mixed solvent thereof, but may be selected from a cyclic carbonate-based solvent, a linear carbonate-based solvent, and a mixed solvent thereof, and a mixture of a cyclic carbonate-based solvent and a linear carbonate-based solvent may be used. The cyclic carbonate-based solvent has a large polarity and can thus sufficiently dissociate lithium ions, but has low ionic conductivity due to its high viscosity. Therefore, characteristics of a lithium secondary battery may be optimized by mixing the cyclic carbonate-based solvent with a linear carbonate-based solvent that has a small polarity but has a low viscosity.

The cyclic carbonate may be selected from the group consisting of ethylene carbonate, propylene carbonate, butylene carbonate, vinylene carbonate, vinyl ethylene carbonate, fluoroethylene carbonate, and a mixture thereof, and the linear carbonate may be selected from the group consisting of dimethyl carbonate, diethyl carbonate, dipropyl carbonate, ethyl methyl carbonate, methyl propyl carbonate, methyl isopropyl carbonate, ethyl propyl carbonate, and a mixture thereof.

In the secondary battery electrolyte according to an exemplary embodiment of the present invention, the non-aqueous organic solvent is a mixed solvent of a cyclic carbonate-based solvent and a linear carbonate-based solvent,

a mixing volume ratio of the linear carbonate-based solvent to the cyclic carbonate-based solvent may be 1 to 9:1, and preferably, the linear carbonate-based solvent and the cyclic carbonate-based solvent may be mixed at a volume ratio of 1.5 to 4:1.

The secondary battery electrolyte according to an exemplary embodiment of the present invention is generally stable in a temperature range of -20°C to 60°C, and preferably at 10°C to 60°C, and electrochemical stability thereof is maintained even at a high voltage of 4.20 V or higher, specifically, 4.30 V or higher, and more specifically, 4.35 V or higher, based on a cathode potential. Therefore, the secondary battery electrolyte may be applied to all the lithium secondary batteries such as a lithium ion battery and a lithium polymer battery.

Non-limiting examples of the secondary battery according to an exemplary embodiment of the present invention include a lithium metal secondary battery, a lithium ion secondary battery, a lithium polymer secondary battery, and a lithium ion polymer secondary battery.

In addition, the present invention provides a lithium secondary battery including the secondary battery electrolyte of the present invention. The lithium secondary battery of the present invention includes:

a cathode;
an anode;
a separator interposed between the cathode and the anode; and
the secondary battery electrolyte according to an exemplary embodiment of the present invention.

The lithium secondary battery of the present invention includes the secondary battery electrolyte containing the cyclophosphate compound represented by Chemical Formula 1, which is a specific compound, such that the lithium secondary battery has improved charge and discharge efficiency, high-temperature characteristics, and high-temperature storage stability, and excellent flame retardancy.

Specifically, the lithium secondary battery according to an exemplary embodiment of the present invention may include:

a cathode including a nickel-cobalt-manganese-based cathode active material including a material represented by the following Chemical Formula 11, a material represented by the following Chemical Formula 12, or a mixture thereof;
an anode;
a separator interposed between the cathode and the anode; and
the secondary battery electrolyte according to an exemplary embodiment of the present invention:

[Chemical Formula 11] $Li_x(Ni_aCo_bMn_c)O_2$

in Chemical Formula 11, $0.5 < x < 1.3$, $0.8 \leq a < 1.2$, $0 < b < 1$, $0 < c < 1$, and $a + b + c = 1$,

[Chemical Formula 12] $Li_x(Ni_aCo_bMn_c)O_4$

in Chemical Formula 12, $0.5 < x < 1.3$, $0.8 \leq a < 2$, $0 < b < 2$, $0 < c < 2$, and $a + b + c = 2$.

The lithium secondary battery according to an exemplary embodiment of the present invention includes the cathode produced using an active material having a high content of nickel, and the secondary battery electrolyte containing the cyclophosphate compound, which is a specific compound, such that the lithium secondary battery may be quickly charged and may have excellent low-temperature characteristics and lifespan characteristics.

As an example, a battery having a significantly high energy density is required for an electric vehicle. Therefore, the lithium secondary battery includes the cathode active material that has a high content of nickel and is usually used as a cathode material when a battery having a high energy density is operated, and also includes the secondary battery electrolyte containing the cyclophosphate compound that has excellent flame retardancy, such that the lithium secondary battery has improved battery characteristics.

Specifically, the lithium secondary battery of the present invention includes a combination of the secondary battery electrolyte containing the cyclophosphate compound represented by Chemical Formula 1 and the specific nickel-cobalt-manganese-based cathode active material represented by Chemical Formula 11 or 12, such that the lithium secondary battery has improved charge and discharge efficiency, high-temperature stability, and lifespan characteristics and excellent flame retardancy even at a high voltage.

Furthermore, the lithium secondary battery of the present invention including a combination of a specific cathode and a secondary battery electrolyte containing a specific additive may have flame retardancy even at a low temperature and a high voltage, and may have improved cycle characteristics, high-temperature retention rate, storage stability, and lifespan characteristics.

The cathode active material preferably combined with the secondary battery electrolyte according to an exemplary embodiment of the present invention may be represented by Chemical Formula 11, and preferably, in Chemical Formula 11, $0.8 \leq x < 1.0$, $0.8 \leq a < 1.0$, $0 < b < 1$, $0 < c < 1$, and $a + b + c = 1$. Specifically, the cathode active material of the present invention may be $LiNi_{0.8}Co_{0.1}Mn_{0.1}O_2$, $LiNi_{0.88}Co_{0.06}Mn_{0.06}O_2$, $LiNi_{0.90}Co_{0.05}Mn_{0.05}O_2$, or a mixture thereof, more preferably, $LiNi_{0.88}CO_{0.06}Mn_{0.06}O_2$, $LiNi_{0.90}Co_{0.05}Mn_{0.05}O_2$, or a mixture thereof, and still more preferably, $LiNi_{0.88}Co_{0.06}Mn_{0.06}O_2$.

The anode of the lithium secondary battery according to an exemplary embodiment of the present invention includes an anode current collector and an anode active material layer formed on the anode current collector. The anode active material layer includes an anode active material capable of intercalating and deintercalating lithium ions. As the anode active material, a carbon material such as crystalline carbon, amorphous carbon, a carbon complex, or a carbon fiber, a lithium metal, or an alloy of lithium with another element may be used. Non-limiting examples of the amorphous carbon include soft carbon (carbon baked at a low temperature), hard carbon, coke, mesocarbon microbead (MCMB) baked at 1,500°C or lower, and mesophase pitch-based carbon fiber (MPCF). Non-limiting examples of the crystalline carbon include a graphite-based material, specifically, natural graphite, graphitized coke, graphitized MCMB, and graphitized MPCF. The carbon material is preferably a material of which an interplanar distance is 3.35 to 3.38 Å and a crystallite size (Lc) measured by X-ray diffraction is at least 20 nm or more. As another element forming an alloy with lithium, aluminum, zinc, bismuth, cadmium, antimony, silicon, lead, tin, gallium, or indium may be used.

The cathode or the anode may be produced by dispersing an active material of each electrode, a binder, and a conductive material, and if necessary, a thickener, in a solvent to prepare an electrode slurry composition, and applying the electrode slurry composition onto an electrode current collector. As a cathode current collector, aluminum, an aluminum alloy, or the like may be mainly used, and as an anode current collector, copper, a copper alloy, or the like may be mainly used. An example of a shape of each of the cathode current collector and the anode current collector may include a foil or mesh shape.

The binder is a material playing a role in paste formation of the active material, adhesion between the active materials, adhesion with the current collector, a buffering effect on expansion and contraction of the active material, and the like. Examples of the binder include polyvinylidene fluoride (PVdF), a polyhexafluoropropylene-polyvinylidene fluoride (PVdF/HFP) copolymer, poly(vinylacetate), polyvinyl alcohol, polyethylene oxide, polyvinylpyrrolidone, alkylated polyethylene oxide, polyvinyl ether, poly(methylmethacrylate), poly(ethylacrylate), polytetrafluoroethylene, polyvinylchloride, polyacrylonitrile, polyvinylpyridine, styrene-butadiene rubber, and acrylonitrile-butadiene rubber. A content of the binder is 0.1 to 30 wt% and preferably 1 to 10 wt% with respect to the electrode active material. When the content of the binder is too small, an adhesive force between the electrode active material and the current collector is insufficient, and when the content of the binder is too large, the adhesive force is improved, but a content of the electrode active material is decreased in accordance with the content of the binder, which is disadvantageous in obtaining a battery having a high capacity.

The conductive material is used to impart conductivity to the electrode, and any electronic conductive material may be used as long as it does not cause a chemical change in a battery to be configured. At least one selected from the group consisting of a graphite-based conductive material, a carbon black-based conductive material, and a metal or metal compound-based conductive material may be used. Examples of the graphite-based conductive material include artificial graphite and natural graphite. Examples of the carbon black-based conductive material include acetylene black, ketjen black, denka black, thermal black, and channel black. Examples of the metal or metal compound-based conductive material include tin, tin oxide, tin phosphate ($SnPO_4$), titanium oxide, potassium titanate, and a perovskite material such as $LaSrCoO_3$ or $LaSrMnO_3$. However, the conductive material is not limited thereto.

A content of the conductive material is preferably 0.1 to 10 wt% with respect to the electrode active material. When the content of the conductive material is less than 0.1 wt%, electrochemical properties are deteriorated, and when the content of the conductive material exceeds 10 wt%, an energy density per weight is decreased.

Any thickener may be used without limitation as long as it may serve to adjust a viscosity of the active material slurry, and for example, carboxymethyl cellulose, hydroxymethyl cellulose, hydroxyethyl cellulose, hydroxypropyl cellulose, or the like may be used.

As the solvent in which the electrode active material, the binder, the conductive material, and the like are dispersed, a non-aqueous solvent or an aqueous solvent is used. Examples of the non-aqueous solvent may include N-methyl-2-pyrrolidone (NMP), dimethylformamide, dimethylacetamide, N,N-dimethylaminopropylamine, ethyleneoxide, and tetrahydrofuran.

The lithium secondary battery according to an exemplary embodiment of the present invention may include a separator preventing a short circuit between the cathode and the anode and providing a movement path of the lithium ions. As such a separator, a polyolefin-based polymer film formed of polypropylene, polyethylene, polyethylene/polypropylene, polyethylene/polypropylene/polyethylene, or polypropylene/polyethylene/polypropylene, or a multi-layer thereof, a micro-porous film, a woven fabric, or a non-woven fabric may be used. In addition, a film obtained by coating a resin having excellent stability on a porous polyolefin film may be used.

The lithium secondary battery of the present invention may be formed into various shapes such as a cylindrical shape and a pouch shape, in addition to an angular shape. The secondary battery is suitable for use requiring a high voltage, a high output, and driving at a high temperature, such as an electric vehicle, in addition to the existing use for a mobile phone, a portable computer, or the like. In addition, the secondary battery may also be used for a hybrid vehicle in connection with the existing internal combustion engine, fuel cell, super capacitor, or the like, and may be used for all other uses such as an electric bike and a power tool requiring a high output, a high voltage, and driving at a high temperature.

Hereinafter, examples and comparative examples of the present invention will be described. However, each of the following examples is merely a preferred example of the present invention, and the present invention is not limited to the following examples. It is assumed that the lithium salt is all dissociated so that the concentration of the lithium ion is 1 mole (1 M) in an electrolyte. A secondary battery electrolyte was prepared by dissolving a corresponding amount of each of a lithium salt such as $LiPF_6$ so that a concentration of the lithium salts in the secondary battery electrolyte was 1 mole (1 M).

[Example 1] Preparation of PEA540

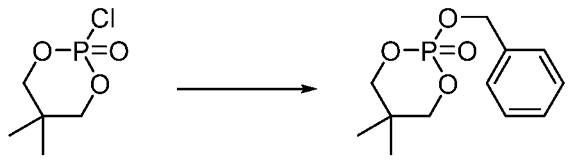

PEA540

To a 500 mL round-bottom flask, a magnetic bar and NaH (2.42 g, 60.7 mmol) were added, THF (135 mL) was added under $N_2$ at 0°C, and the mixture was stirred for 10 minutes. The mixture was stirred while benzyl alcohol (5.37 mL, 52.0 mmol) was added dropwise thereto for 15 minutes. The mixture was additionally stirred for 30 minutes, when hydrogen was no longer generated, a solution obtained by dissolving 2-chloro-5,5-dimethyl-1,3,2-dioxaphosphorinane 2-oxide (8.0 g, 43.3 mmol) in THF (15 mL) was added dropwise, the temperature was slowly raised to room temperature, and then the mixture was stirred for 24 hours. After the reaction was completed, an $NH_4Cl$ solution was added and the reaction solution was quenched at 0°C, and the reaction solution was extracted with ethyl acetate 3 times. Moisture was removed from the separated organic layer with $MgSO_4$, the solvent in the filtrate obtained by filtering the reaction solution was completely removed under reduced pressure, and then the filtrate was purified by silica gel chromatography (eluent: 25% ethyl acetate in hexane), thereby obtaining 4.8 g (18.6 mmol) of the title compound PEA540 in a yield of 43%.

$^1$H NMR (500MHz, DMSO-d6) δ 7.36-7.44 (m, 5H), 5.04 (d, J=8.1 Hz, 2H), 3.95-4.05 (m, 2H), 3.88-3.93 (m, 2H), 1.14 (s, 3H), 0.80 (s, 3H) ppm

[Example 2] Preparation of PEA541

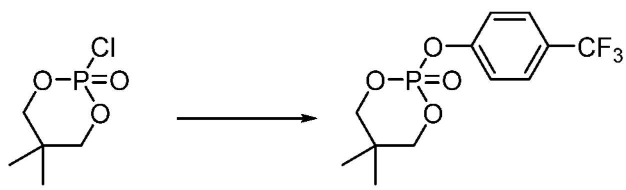

PEA541

To a 2 L round-bottom flask, a magnetic bar, 4-(trifluoromethyl)phenol (75 g, 462 mmol), and toluene (850 mL) were added, and the mixture was stirred at 0°C for 10 minutes. NaOH (18.5 g, 462 mmol) was slowly added thereto, and the mixture was stirred at 0°C for about 1 hour. 2-Chloro-5,5-dimethyl-1,3,2-dioxaphosphorinane 2-oxide (85.4 g, 462 mmol) was slowly added thereto at 0°C, and the mixture was stirred for 24 hours while naturally raising the temperature from 0°C to room temperature. After the reaction was completed, water and ethyl acetate were added, and the reaction solution was washed with water 2 times. $MgSO_4$ was added to remove moisture from the extracted organic layer, and then the solvent was completely removed under reduced pressure. A small amount of ethyl acetate was added to the

obtained residue, a magnetic bar was added, the mixture was stirred, and a large amount of hexane was poured, thereby obtaining white solid crystals. The white solid crystals were washed with hexane several times, and filtering was performed, thereby obtaining 57 g (185 mmol) of the title compound PEA541 in a yield of 40%.

$^1H$ NMR (500 MHz, CDCl3) δ 7.64 (d, J=8.8 Hz, 2H), 7.38 (d, J=8.7 Hz, 2H), 4.07-4.27 (m, 2H), 4.00-4.07 (m, 2H), 1.36 (s, 3H), 0.94 (s, 3H) ppm

[Comparative Example 1] Preparation of PEA289

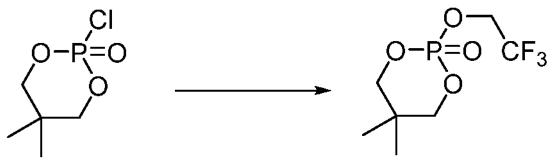

PEA289

To a 1 L round-bottom flask, a magnetic bar, 2,2,2-trifluoroethanol (14.2 mL, 195.1 mmol), triethylamine (54.3 mL, 390.0 mmol), 4-(dimethylamino)pyridine (2.97 g, 24.3 mmol),and THF (200 mL) were added, and the mixture was stirred under $N_2$ at 0°C. A solution obtained by dissolving 2-chloro-5,5-dimethyl-1,3,2-dioxaphosphorinane 2-oxide (30 g, 162.5 mmol) in THF (250 mL) was slowly added dropwise to the reaction solution for 1 hour. The mixture was stirred for 3 hours, solids were removed through filtration, and then the solvent was completely removed from the filtrate under reduced pressure. The obtained residue was purified by silica gel chromatography (eluent: 20% ethyl acetate in hexane) to obtain 29 g (123.5 mmol) of the title compound in a yield of 76%.

$^1H$ NMR (500 MHz, CDCl3) δ 4.36-4.42 (m, 2H), 4.13-4.16 (m, 2H), 3.92-3.99 (m, 2H), 1.29 (s, 3H), 0.89 (s, 3H) ppm

[Comparative Example 2] Preparation of PEA288

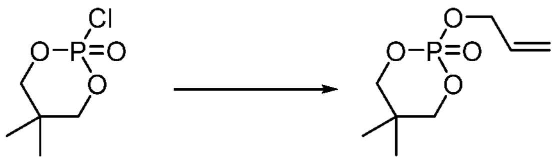

PEA288

Tetrahydrofuran (THF, 10 mL) was added to sodium hydride (NaH, 0.39 g, 16.3 mmol), and stirring was performed while allyl alcohol (1.11 mL, 0.94 g, 16.3 mmol) was added dropwise for 15 minutes. The mixture was further stirred for 15 minutes, a solution obtained by dissolving 2-chloro-5,5-dimethyl-1,3,2-dioxaphosphorinane 2-oxide in tetrahydrofuran (15 mL) was added dropwise, and the mixture was stirred at room temperature for 12 hours. After the stirring was completed, the solvent was removed under reduced pressure, and the reaction solution was extracted using dichloromethane ($CH_2Cl_2$) (30 mL) and distilled water (30 mL), and an organic layer was separated. Residual moisture in the organic material was removed from the separated organic layer with anhydrous magnesium sulfate ($MgSO_4$), and the reaction solution was filtered. The filtrate was concentrated under reduced pressure. The obtained residue was purified by silica gel column chromatography (eluent: 25% EtOAc in hexane), thereby obtaining 1.33 g (6.5 mmol) of the title compound in a yield of 39.7%.

$^1H$ NMR (500 MHz, CDCl3) δ 5.86-6.04 (m, 1H), 5.22-5.40 (m, 1H), 4.51-4.61 (m, 2H), 4.08 (dd, Jl=5.9 Hz, J2=8.8 Hz, 2H), 3.91 (dd, Jl=8.8 Hz, J2=17.8 Hz, 2H), 1.24 (s, 3H), 0.90 (s, 3H) ppm

[Examples 3 and 4]

A solution obtained by dissolving $LiPF_6$ in a mixed solvent obtained by mixing ethylene carbonate (EC) and ethyl methyl carbonate (EMC) at a volume ratio of 25:75 to obtain a 1.0 M solution was used as a basic electrolyte (1.0 M $LiPF_6$, EC/EMC = 25/75), and the components shown in Table 1 were additionally added, thereby preparing an

electrolyte.

A battery to which the non-aqueous electrolyte was applied was produced as follows.

$LiNi_{0.88}Co_{0.06}Mn_{0.06}O_2$ as a cathode active material, polyvinylidene fluoride (PVdF) as a binder, and carbon as a conductive material were mixed at a weight ratio of 98:1:1, and then the mixture was dispersed in N-methyl-2-pyrrolidone, thereby preparing a cathode slurry. The slurry was coated on an aluminum foil having a thickness of 12 μm, and the aluminum foil coated with the slurry was dried and rolled, thereby producing a cathode. Artificial graphite and natural graphite as anode active materials, styrene-butadiene rubber as a binder, and carboxymethyl cellulose as a thickener were mixed at a weight ratio of 96:2:2, and the mixture was dispersed in water, thereby preparing an anode active material slurry. The slurry was coated on a copper foil having a thickness of 8 μm, and the copper foil coated with the slurry was dried and rolled, thereby producing an anode.

A cell was configured by stacking a film separator made of polyethylene (PE) and having a thickness of 13 μm between the electrodes thus manufactured, and using a pouch having a size of thickness 5 mm × width 50 mm × length 60 mm, and the non-aqueous electrolyte was injected thereto, thereby manufacturing a 2 Ah grade lithium secondary battery for EV.

The performance of the 2 Ah grade battery for EV produced as described above was evaluated as follows. Evaluation items are as follows.

* Evaluation Items *

1. Initial performance: A process of charging the battery to 4.2 V and 0.05 C with 0.5 C CC-CV charging mode at room temperature and discharging the battery to 2.7 V with a current of 0.5 C was repeated 100 times or more. At this time, the first capacity discharge capacity was defined as 1 C, and a capacity retention rate during the lifespan was calculated by dividing the $300^{th}$ discharge capacity by the first discharge capacity.
2. Thickness increase rate after 4 weeks at 60°C: When the thickness of the battery after being charged at 4.2 V with 1 C CC-CV at room temperature for 3 hours was set as 'A', and the thickness of the battery after being allowed to stand under a exposed normal pressure for 4 weeks in the atmosphere at 60°C using a closed thermostat was set as 'B', the thickness increase rate was calculated by the following Equation 1. A cell thickness was measured using a flat plate thickness measuring apparatus (manufactured by Misutoyo Corporation, 543-490B).

$$\text{Thickness increase rate (\%)} = (B-A)/A \times 100$$

3. Capacity retention ratio after 4 weeks at 60°C: A battery was allowed to stand at 60°C for 4 weeks and then at room temperature for 30 minutes, and calculation was performed by dividing a capacity obtained from 1 C rate CC discharge (2.7 V cut-off) after IR measurement by a capacity measured before storage and the result was shown in a percentage.

$$\text{Capacity retention rate of battery (\%)} = (\text{final capacity}/\text{initial capacity}) \times 100 \text{ (\%)}$$

4. Capacity recovery rate after 4 weeks at 60°C (storage efficiency at high temperature): A battery was allowed to stand at 60°C for 4 weeks and then discharged with a current of 1 C with CC to 2.7 V, and then a usable capacity (%) relative to an initial capacity was measured.
5. Measurement of hot box delay effect: When the lithium secondary battery was fully charged, the temperature was raised to 150°C at a rate of increase of 5 °C/min, and then the temperature was maintained at 150°C, the time it takes for the battery to explode was measured.
6. Flame retardancy evaluation (self-extinguishing time measurement SET evaluation): After lighting 1 g of the electrolyte, the time for self-extinguishing the electrolyte was measured.

[Comparative Examples 3 to 5]

The same process and evaluation were performed as those in Examples 3 and 4 except that the additives for

the electrolyte shown in Table 1 were changed in Examples 3 and 4. The results thereof are shown in Table 1.

The performance of the battery produced as described above was evaluated by the above evaluation items. The results thereof are shown in Table 1.

[Table 1]

| | | Example 3 | Example 4 | Comparative Example 3 | Comparative Example 4 | Comparative Example 5 |
|---|---|---|---|---|---|---|
| Additive | Type | PEA540 | PEA541 | - | PEA289 | PEA288 |
| | Content (wt%) | 10 | 10 | - | 10 | 10 |
| Initial performance | Coulombic efficiency (%) | 82.1 | 81.8 | 82.0 | 72 | 71 |
| | Capacity (mAh) | 1610 | 1686 | 1737 | 1580 | 1570 |
| | C_DCIR (mΩ) | 35.41 | 39.37 | 45.22 | 31.37 | 41.9 |
| | D_DCIR (mΩ) | 38.48 | 40.53 | 33.94 | 49.66 | 43.0 |
| | Thickness [mm] | 5.08 | 5.12 | 5.11 | 5.80 | 5.92 |
| Storage at 60°C (after 4 weeks) | Capacity retention rate | 80 | 90 | 91 | 75 | 73 |
| | Capacity recovery rate | 82 | 92 | 93 | 77 | 75 |
| | C_DCIR (mΩ) | 60.30 | 36.51 | 28.29 | 70.11 | 77.2 |
| | D_DCIR (mΩ) | 41.93 | 40.68 | 33.11 | 78.22 | 81.3 |
| | Thickness increase rate (%) | 1 | 1 | 2 | 23 | 39 |
| Evaluation of flame retardant characteristics | Hot box delay time (min) | 3.2 | 2.9 | 0 | 1.2 | 1.1 |
| | Self-extinguishing time(SET) (sec) | 43 | 41 | 60 | 51 | 55 |

It could be appreciated from Table 1 that each of the lithium secondary batteries of Examples 3 and 4 including the secondary battery electrolyte containing the cyclophosphate compound of the present invention had improved or equivalent charge and discharge efficiency, high-temperature storage stability, and lifespan characteristics while having excellent flame retardancy in comparison to the lithium secondary battery of Comparative Example 3 containing no cyclophosphate compound and the lithium secondary batteries of Comparative Examples 4 and 5 containing a cyclophosphate compound having a functional group different from that of the present invention.

As set forth above, the secondary battery electrolyte according to an exemplary embodiment of the present invention contains a cyclophosphate compound, such that the secondary battery electrolyte has significantly improved flame retardancy.

Further, although the secondary battery electrolyte according to an exemplary embodiment of the present invention contains a cyclophosphate compound having flame retardancy, charge and discharge efficiency is not reduced even at a high voltage, and lifespan characteristics, high-temperature stability, a high-temperature capacity retention

rate, and a recovery rate are significantly excellent.

Further, the secondary battery electrolyte according to an exemplary embodiment of the present invention has excellent initial performance.

Therefore, a lithium secondary battery including the secondary battery electrolyte according to an exemplary embodiment of the present invention has excellent flame retardancy while maintaining charge and discharge efficiency at a high voltage.

Further, the lithium secondary battery according to an exemplary embodiment of the present invention includes the secondary battery electrolyte according to an exemplary embodiment of the present invention, such that the lithium secondary battery has excellent high-temperature storage stability and self-extinguishing properties.

## Claims

1. A secondary battery electrolyte comprising:

   a lithium salt;
   a non-aqueous organic solvent; and
   a cyclophosphate compound represented by the following Chemical Formula 1:

   [Chemical Formula 1]

   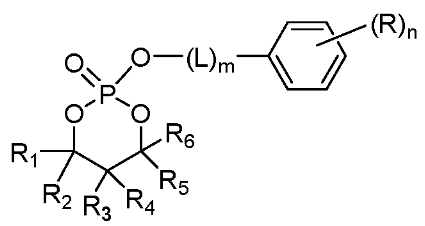

   in Chemical Formula 1,
   $R_1$ to $R_6$ are each independently hydrogen, C1-C10 alkyl, or C6-C12 aryl C1-C10 alkyl;
   L is C1-C5 alkylene;
   R is fluoro or fluoro C1-C10 alkyl;
   m is an integer of 0 to 2; and
   n is an integer of 0 to 5.

2. The secondary battery electrolyte of claim 1, wherein in Chemical Formula 1, $R_1$ to $R_6$ are each independently hydrogen, C1-C5 alkyl, or C1-C5 alkyl substituted with phenyl; L is C1-C3 alkylene; R is fluoro or fluoro C1-C5 alkyl; m is an integer of 0 or 1; and n is an integer of 0 to 2.

3. The secondary battery electrolyte of claim 1, wherein the cyclophosphate compound is a cyclophosphate compound represented by the following Chemical Formula 2:

   [Chemical Formula 2]

   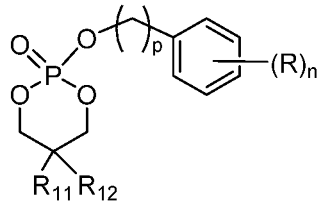

   in Chemical Formula 2,

   R is fluoro or fluoro C1-C10 alkyl;
   $R_{11}$ and $R_{12}$ are each independently hydrogen, C1-C10 alkyl, or C6-C12 aryl C1-C10 alkyl;

p is an integer of 0 to 3; and
n is an integer of 0 to 5.

4. The secondary battery electrolyte of claim 3, wherein in Chemical Formula 2, R is fluoro or perfluoro C1-C5 alkyl; $R_{11}$ and $R_{12}$ are each independently hydrogen, C1-C5 alkyl, or phenyl C1-C5 alkyl; p is an integer of 0 to 2; and n is an integer of 0 to 3.

5. The secondary battery electrolyte of claim 1, wherein the cyclophosphate compound is selected from the following compounds:

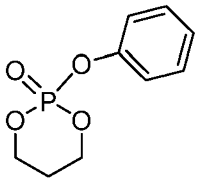 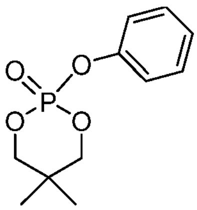 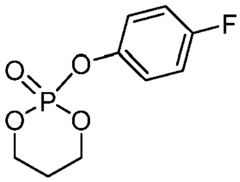 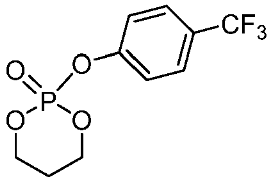

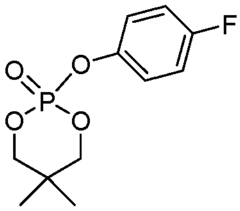 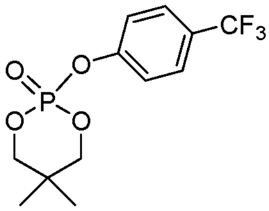 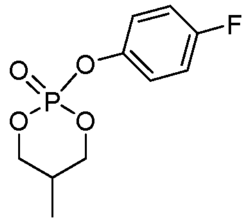 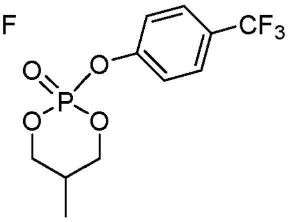

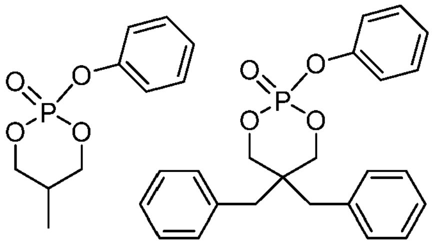 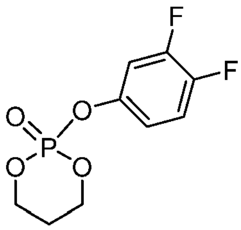 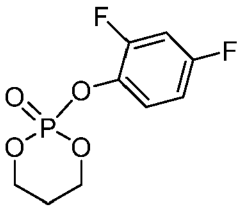

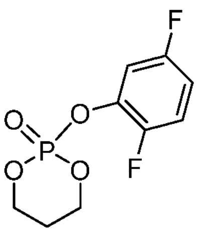 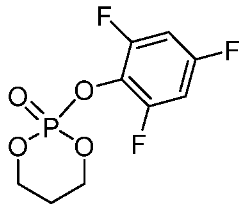 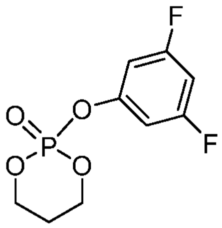 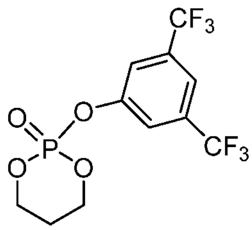

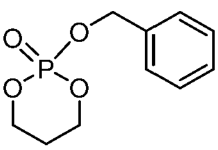 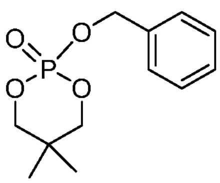 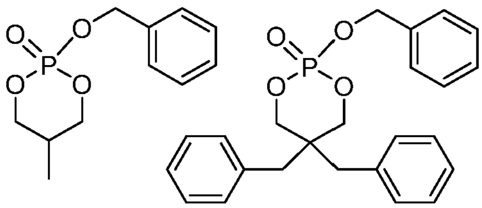

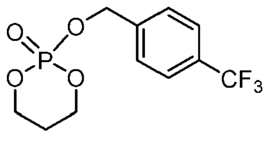 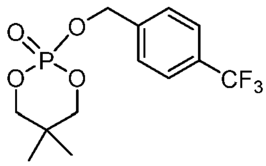 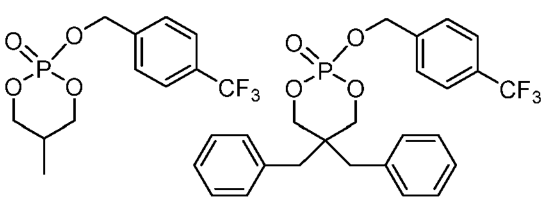 .

6. The secondary battery electrolyte of claim 1, wherein the cyclophosphate compound is contained in an amount of 1 to 15 wt% with respect to a total weight of the secondary battery electrolyte.

7. The secondary battery electrolyte of claim 1, further comprising one or two or more additives selected from the group consisting of an oxalatoborate-based compound, an oxalatophosphate-based compound, a fluorine-substituted carbonate-based compound, a vinylidene carbonate-based compound, and a sulfinyl group-containing compound.

8. The secondary battery electrolyte of claim 7, wherein the additive is contained in an amount of 0.2 to 5 wt% with respect to a total weight of the secondary battery electrolyte.

9. The secondary battery electrolyte of claim 1, wherein the lithium salt is one or two or more selected from the group consisting of $LiPF_6$, $LiBF_4$, $LiClO_4$, $LiSbF_6$, $LiAsF_6$, $LiN(SO_3C_2F_5)_2$, $LiCF_3SO_3$, $LiC_4F_9SO_3$, $LiC_6H_5SO_3$, LiSCN, $LiAlO_2$, $LiAlCl_4$, LiCl, LiI, and $LiB(C_2O_4)_2$.

10. The secondary battery electrolyte of claim 9, wherein the lithium salt is present in an amount of 0.3 to 1.2 moles.

11. A lithium secondary battery comprising:

a cathode;
an anode;
a separator interposed between the cathode and the anode; and
the secondary battery electrolyte of any one of claims 1 to 10.

**Patentansprüche**

1. Sekundärbatterie-Elektrolyt, umfassend:

ein Lithiumsalz;
ein nicht-wässriges organisches Lösungsmittel; und
eine Cyclophosphatverbindung der folgenden chemischen Formel 1:

[Chemische Formel 1]

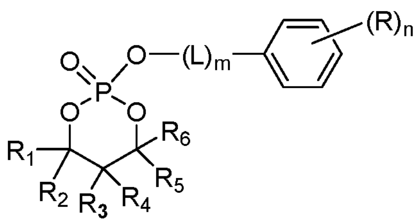

in der chemischen Formel 1 gilt,
$R_1$ bis $R_6$ sind jeweils unabhängig voneinander Wasserstoff, C1-C10-Alkyl oder C6-C12-Aryl-C1-C10-Alkyl;
L ist C1-C5-Alkylen;
R ist Fluor oder Fluor-C1-C10-Alkyl;
m ist eine ganze Zahl von 0 bis 2; und
n ist eine ganze Zahl von 0 bis 5.

2. Sekundärbatterie-Elektrolyt nach Anspruch 1, wobei in der chemischen Formel 1 $R_1$ bis $R_6$ jeweils unabhängig voneinander Wasserstoff, C1-C5-Alkyl oder mit Phenyl substituiertes C1-C5-Alkyl sind; L C1-C3-Alkylen ist; R Fluor oder Fluor-C1-C5-Alkyl ist; m eine ganze Zahl von 0 oder 1 ist; und n eine ganze Zahl von 0 bis 2 ist.

3. Sekundärbatterie-Elektrolyt nach Anspruch 1, wobei die Cyclophosphatverbindung eine Cyclophosphatverbindung der folgenden chemischen Formel 2 ist:

[Chemische Formel 2]

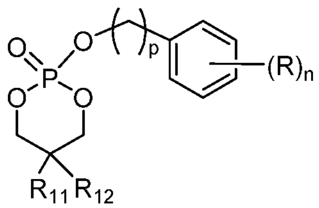

in der chemischen Formel 2 gilt,

R ist Fluor oder Fluor-C1-C10-Alkyl;
$R_{11}$ und $R_{12}$ sind jeweils unabhängig voneinander Wasserstoff, C1-C10-Alkyl oder C6-C12-Aryl-C1-C10-Alkyl;
p ist eine ganze Zahl von 0 bis 3; und
n ist eine ganze Zahl von 0 bis 5.

4. Sekundärbatterie-Elektrolyt nach Anspruch 3, wobei in der chemischen Formel 2 R Fluor- oder Perfluor-C1-C5-Alkyl ist; $R_{11}$ und $R_{12}$ jeweils unabhängig voneinander Wasserstoff, C1-C5-Alkyl oder Phenyl-C1-C5-Alkyl sind; p eine ganze Zahl von 0 bis 2 ist; und n eine ganze Zahl von 0 bis 3 ist.

5. Sekundärbatterie-Elektrolyt nach Anspruch 1, wobei die Cyclophosphatverbindung aus den folgenden Verbindungen ausgewählt ist:

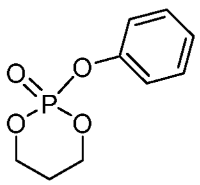 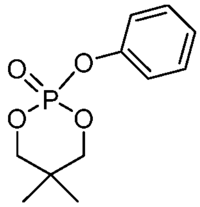 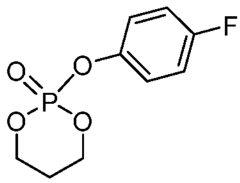 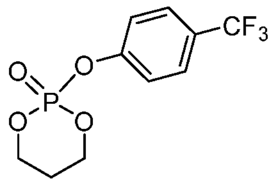

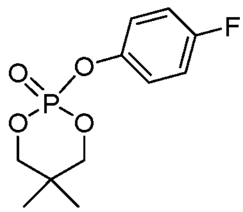 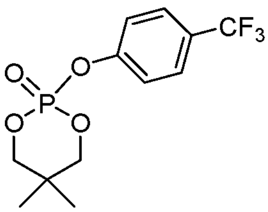 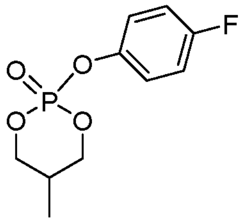 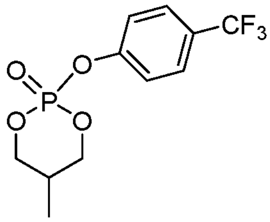

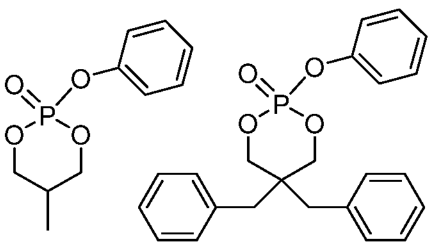 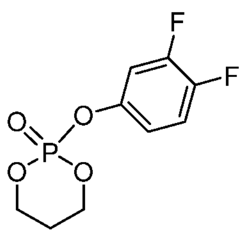 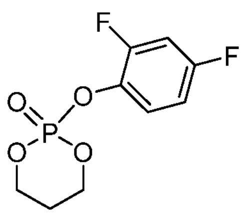

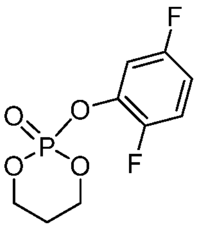 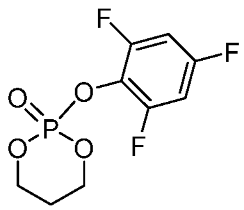 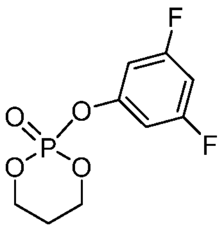 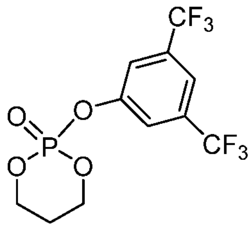

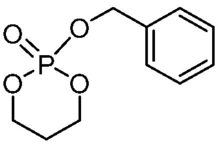 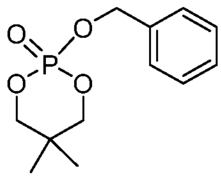 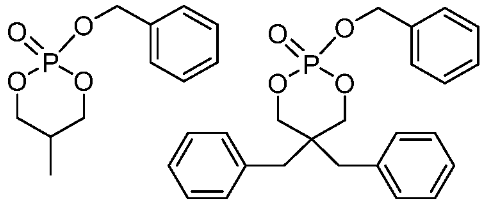

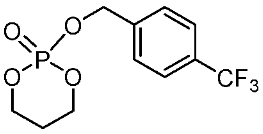 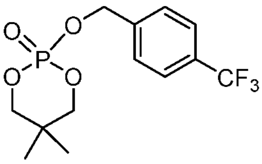 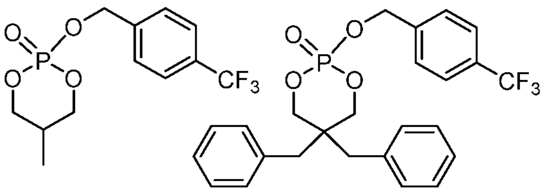.

6. Sekundärbatterie-Elektrolyt nach Anspruch 1, wobei die Cyclophosphatverbindung in einer Menge von 1 bis 15 Gew.-%, bezogen auf das Gesamtgewicht des Sekundärbatterie-Elektrolyten, enthalten ist.

7. Sekundärbatterie-Elektrolyt nach Anspruch 1, der des Weiteren ein oder zwei oder mehr Additive umfasst, die ausgewählt sind aus einer Gruppe bestehend aus einer Verbindung auf Oxalatoborat-Basis, einer Verbindung auf Oxalatophosphat-Basis, einer fluorsubstituierten Verbindung auf Carbonat-Basis, einer Verbindung auf Vinylidencarbonat-Basis und einer sulfinylgruppenhaltigen Verbindung.

8. Sekundärbatterie-Elektrolyt nach Anspruch 7, wobei das Additiv in einer Menge von 0,2 bis 5 Gew.-%, bezogen auf das Gesamtgewicht des Sekundärbatterie-Elektrolyten, enthalten ist.

9. Sekundärbatterie-Elektrolyt nach Anspruch 1, wobei das Lithiumsalz eines oder zwei oder mehr ist, ausgewählt aus der Gruppe bestehend aus $LiPF_6$, $LiBF_4$, $LiClO_4$, $LiSbF_6$, $LiAsF_6$, LiN $(SO_3C_2F_5)_2$, $LiCF_3SO_3$, $LiC_4F_9SO_3$, $LiC_6H_5SO_3$, LiSCN, $LiAlO_2$, $LiAlCl_4$, LiCl, LiI, und $LiB(C_2O_4)_2$.

10. Sekundärbatterie-Elektrolyt nach Anspruch 9, wobei das Lithiumsalz in einer Menge von 0,3 bis 1,2 Molen vorhanden ist.

11. Lithium-Sekundärbatterie, umfassend:

eine Kathode;
eine Anode;
einen Separator, der zwischen der Kathode und der Anode angeordnet ist; und
den Sekundärbatterie-Elektrolyt nach einem der Ansprüche 1 bis 10.

**Revendications**

1. Électrolyte de batterie secondaire comprenant : un sel de lithium ;

un solvant organique non aqueux ; et
un composé de cyclophosphate représenté par la formule chimique 1 suivante :

[Formule chimique 1]

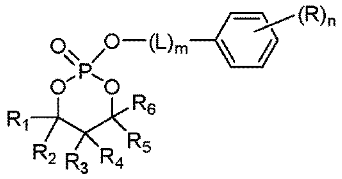

dans la Formule chimique 1,
$R_1$ à $R_6$ sont chacun indépendamment un hydrogène, un alkyle en C1-C10, ou un aryle en C6-C12 alkyle en C1-C10 ;
L est un alkylène en C1-C5 ;
R est un fluoro ou un alkyle en C1-C10 fluoro ;
m est un nombre entier de 0 à 2 ; et
n est un nombre entier de 0 à 5.

2. Électrolyte de batterie secondaire de la revendication 1, dans lequel, dans la formule chimique 1, $R_1$ à $R_6$ sont chacun indépendamment un hydrogène, un alkyle en C1-C5, ou un alkyle en C1-C5 substitué par un phényle ; L est un alkylène en C1- C3 ; R est un fluoro ou un alkyle en C1-C5 fluoré ; m est un nombre entier de O ou 1 ; et n est un nombre entier de 0 à 2.

3. Électrolyte de batterie secondaire de la revendication 1, dans lequel le composé de cyclophosphate est un composé de cyclophosphate représenté par la formule chimique 2 suivante :

[Formule chimique 2]

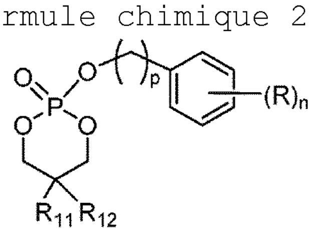

dans la Formule chimique 2,

R est un fluoro ou un alkyle en C1-C10 fluoro ;
$R_{11}$ et $R_{12}$ sont chacun indépendamment un hydrogène, un alkyle en C1-C10 ou un aryle en C6-C12 en C1-C10 ;
p est un nombre entier de 0 à 3 ; et n est un nombre entier de 0 à 5.

4. Électrolyte de batterie secondaire de la revendication 3, dans lequel, dans la formule chimique 2, R est un alkyle en C1-C5 fluoré ou perfluoré ; Rn et $R_{12}$ sont chacun indépendamment un hydrogène, un alkyle en C1-C5, ou un phényle alkyle en C1-C5 ; p est un nombre entier de 0 à 2 ; et n est un nombre entier de 0 à 3.

5. Électrolyte de batterie secondaire de la revendication 1, dans lequel le composé cyclophosphate est choisi parmi les composés suivants :

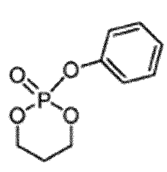 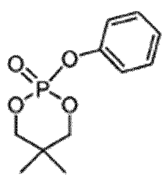 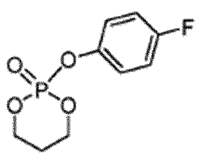 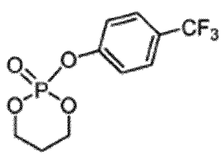

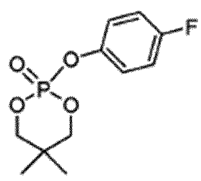 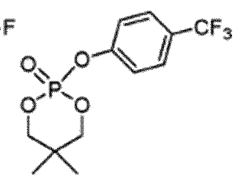 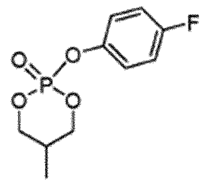 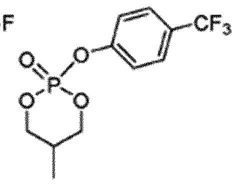

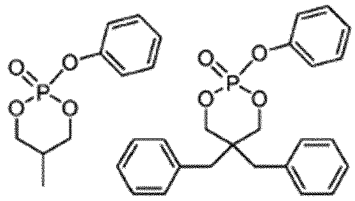 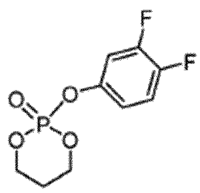 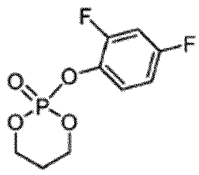

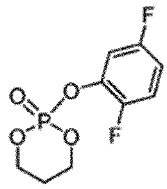 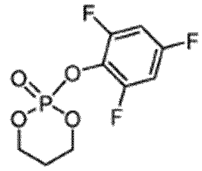 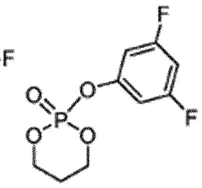 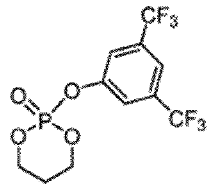

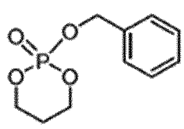 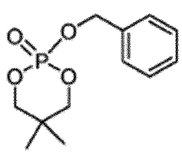 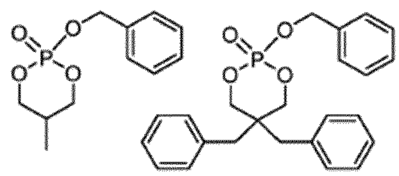

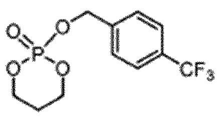 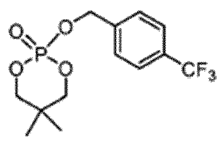 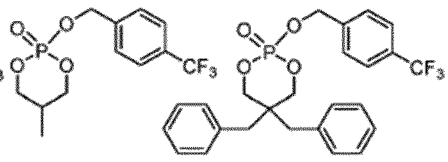.

6. Électrolyte de batterie secondaire de la revendication 1, dans lequel le composé de cyclophosphate est contenu dans une quantité de 1 à 15 % en poids par rapport au poids total de l'électrolyte de batterie secondaire.

7. Électrolyte de batterie secondaire de la revendication 1, comprenant en outre un ou deux additifs ou plus choisis dans le groupe constitué d'un composé à base d'oxalatoborate, d'un composé à base d'oxalatophosphate, d'un composé à base de carbonate substitué par du fluor, d'un composé à base de carbonate de vinylidène et d'un composé contenant un groupe sulfinyle.

8. Électrolyte de batterie secondaire de la revendication 7, dans lequel l'additif est contenu dans une quantité de 0,2 à 5 % en poids par rapport au poids total de l'électrolyte de batterie secondaire.

9. Électrolyte de batterie secondaire de la revendication 1, dans lequel le sel de lithium est un ou deux ou plus choisis dans le groupe constitué de $LiPF_6$, $LiBF_4$, $LiClO_4$, $LiSbF_6$, $LiAsF_6$, $LiN(SO_3C_2F_5)_2$, $LiCF_3SO_3$, $LiC_4F_9SO_3$, $LiC_6H_5SO_3$, LiSCN, $LiAlO_2$, $LiAlCl_4$, LiCl, LiI et $LiB(C_2O_4)_2$.

10. Électrolyte de batterie secondaire de la revendication 9, dans lequel le sel de lithium est présent dans une quantité de 0,3 à 1,2 moles.

11. Batterie secondaire au lithium comprenant : une cathode ;

une anode ;

une couche de séparation interposée entre la cathode et l’anode,
et
l’électrolyte de batterie secondaire de l’une des revendications 1 à 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210128105
- US 2020127333 A1